# EUROPEAN PATENT APPLICATION

(11) **EP 4 686 251 A1**
(43) Date of publication of application: **28.01.2026**
(21) Application number: 24806365.3
(22) Date of filing: 30.04.2024
(51) Int. Cl.: H04W 24/02, H04W 4/02, G01S 19/42

(54) **INFORMATION TRANSMISSION METHOD, AND TERMINAL, NETWORK DEVICE AND STORAGE MEDIUM**

(30) Priority: 12.05.2023 CN 202310536682
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: TAN, Jiayao, Beijing 100032 (CN); QIN, Wei, Beijing 100032 (CN); CHAI, Li, Beijing 100032 (CN); LIU, Yuzhen, Beijing 100032 (CN)
(74) Representative: Patentgruppen A/S
(86) International application number: PCT/CN2024/090729
(87) International publication number: WO 2024/235009

(57) **Abstract**

Embodiments of the present disclosure provide information transmission methods, UEs, network devices, and storage media. The method includes: sending, by a UE, a first message to a network, wherein the first message includes at least one of the following pieces of information: no GNSS measurement execution by the UE; skipping next GNSS measurement by the UE; cause(s) for no GNSS measurement execution or skipping next GNSS measurement; preference regarding GNSS measurement gap configuration for the UE; mobility information; requesting the network for GNSS measurement gap configuration; GNSS position validity duration; GNSS measurement successful completion; new GNSS position validity duration or updated GNSS position validity duration; GNSS measurement time duration; identity(es) or index(es) of GNSS measurement execution gap configuration information for GNSS measurement execution; autonomous GNSS measurement execution.

## Description

### Cross-reference to related application

This application claims a priority of the Chinese patent application No. 202310536682.7 filed on May 12, 2023, which is incorporated herein by reference in its entirety.

### Technical field

The present disclosure relates to the field of Internet of Things (IoT) technology, specifically to information transmission methods, User Equipments, network devices, and storage media.

### Background

The IoT Non-Terrestrial Networks (NTN) are networks designed to serve IoT devices. These devices include NarrowBand Internet of Things (NB-IoT) devices and enhanced Machine-Type Communication (eMTC) devices.

In an IoT NTN network, before a terminal connects to an NTN cell, it can obtain its Global Navigation Satellite System (GNSS) position. Based on the GNSS position, satellite ephemeris information, and Timing Advance (TA), the UE performs TA pre-compensation to adapt to the long propagation delays experienced over NTN service links and feeder links, ensuring uplink synchronization for the UE.

In scenarios involving long connection transmissions, it is necessary for the UE to maintain a connected state for a long period. However, due to the mobility of the UE, the GNSS position validity is limited. This can result in the GNSS position expiring during a long transmission period, leading to inaccurate TA values calculated based on the GNSS position. This inaccuracy can negatively impact time-domain pre-compensation, making it difficult to maintain uplink synchronization. Therefore, GNSS measurements need to be performed by the UE while in a connected state.

However, IoT devices such as NB-IoT/eMTC UEs typically have low capabilities and are unable to perform GNSS measurements and NB-IoT/eMTC communications (ordinary data transmission) simultaneously. Consequently, the network allocates a GNSS measurement gap for the UE. During this GNSS measurement gap, the UE performs GNSS measurements to obtain the latest GNSS position and then calculates the TA value to maintain uplink synchronization. Currently, there is no clear implementation scheme for how to configure GNSS measurements for UEs.

### Summary

At least one embodiment of the present disclosure provides information transmission methods, UEs, network devices, and storage media for assisting in the GNSS measurement configuration for the UE. To address the above technical problem(s), the present disclosure is implemented as follows.

In a first aspect, embodiments of the present disclosure provide an information transmission method, including: sending, by a UE, a first message to a network, wherein the first message includes at least one of the following pieces of information:
no GNSS measurement execution by the UE;
skipping next GNSS measurement by the UE;
cause(s) for no GNSS measurement execution or skipping next GNSS measurement;
preference regarding GNSS measurement gap configuration for the UE;
mobility information;
requesting the network for GNSS measurement gap configuration;
GNSS position validity duration;
GNSS measurement successful completion;
new GNSS position validity duration or updated GNSS position validity duration;
GNSS measurement time duration;
identity(es) or index(es) of GNSS measurement execution gap configuration information for GNSS measurement execution;
autonomous GNSS measurement execution.

According to some embodiments of the present disclosure, the method further includes: determining, by the UE, whether to execute GNSS measurement or determining whether to skip next GNSS measurement, in accordance with one or more of the GNSS position validity duration, the mobility information, uplink synchronization state, or other assistant information.

According to some embodiments of the present disclosure, the method further includes: receiving at least one set of GNSS measurement gap configuration, wherein the GNSS measurement gap configuration includes at least one of:
identity(es) or index(es) of GNSS measurement gap configuration;
GNSS measurement gap length(s);
periodicity(s) of GNSS measurement gap;
triggering condition(s)/triggering event(s) for GNSS measurement;
start time and/or complete time of GNSS measurement gap;
offset value(s) of start time and/or complete time of GNSS measurement gap relative to start time and/or complete time of GNSS position validity;
protection time of GNSS measurement gap.

According to some embodiments of the present disclosure, the sending the first message includes at least one of the following:
determining, by the UE, whether to execute GNSS position measurement or skip next GNSS measurement upon receipt of GNSS measurement triggering information sent by the network, and sending the first message to the network;
determining, by the UE, whether to execute GNSS position measurement or skip next GNSS measurement prior to execution of periodic GNSS measurement, and sending the first message to the network.

According to some embodiments of the present disclosure, the GNSS measurement triggering information includes at least one of:
indicator for triggering the UE to execute GNSS measurement;
GNSS measurement gap configuration;
identity(es) or index(es) of GNSS measurement gap configuration.

According to some embodiments of the present disclosure, the preference regarding GNSS measurement gap configuration for the UE includes at least one of:
desirable GNSS measurement gap mode;
periodic or aperiodic GNSS measurement;
power consumption needs.

According to some embodiments of the present disclosure, when the first message comprises information regarding no GNSS measurement execution or skipping next GNSS measurement but does not comprise the new GNSS position validity duration or the updated GNSS position validity duration, the first message is used to implicitly indicate that the new GNSS position validity duration or the updated GNSS position validity duration is the same as current GNSS position validity duration or twice as current GNSS position validity duration; or, when the first message comprises information regarding the GNSS measurement successful completion but does not comprise the new GNSS position validity duration or the updated GNSS position validity duration, the first message is used to implicitly indicate that the new GNSS position validity duration or the updated GNSS position validity duration is the same as current GNSS position validity duration or twice as current GNSS position validity duration.

According to some embodiments of the present disclosure, in an event that the UE fails to receive the at least one set of GNSS measurement gap configuration sent by the network, the information transmission method further includes:
executing, by the UE, autonomous GNSS measurement, when the GNSS position validity duration expires or completes, wherein measurement time is the same as the time for GNSS measurement reported within the first message by the UE.

According to some embodiments of the present disclosure, the method further includes:
receiving, by the UE, an indicator used to indicate autonomous GNSS measurement is enabled by the network.

According to some embodiments of the present disclosure, the desirable GNSS measurement gap mode includes at least one of:
start time of GNSS measurement gap being within the GNSS position validity duration or at complete time of the GNSS position validity duration of the UE;
start time of GNSS measurement gap being after complete time of the GNSS position validity duration of the UE;
complete time of GNSS measurement gap being within the GNSS position validity duration or at complete time of the GNSS position validity duration of the UE;
no overlapping between the GNSS measurement gap and the GNSS position validity duration of the UE;
partially overlapping between the GNSS measurement gap and the GNSS position validity duration of the UE;
the GNSS measurement gap being entirely within the GNSS position validity duration of the UE.

According to some embodiments of the present disclosure, the UE does not execute data transmission or only execute data re-transmission within the protection time,
wherein configuration information for the protection time is either pre-determined or configured by the network for the UE.

According to some embodiments of the present disclosure, when the UE is configured with inter-frequency/inter-system measurement by the network, and there is overlap between inter-frequency/inter-system measurement gap and the GNSS measurement gap, the method further includes at least one of:
executing, by the UE, the higher-priority measurement between the inter-frequency/inter-system measurement and the GNSS measurement, and reporting measurement result(s) to the network and/or requesting the network for re-configuration of the lower-priority measurement after completion of the higher-priority measurement, wherein the priority between the inter-frequency/inter-system measurement and the GNSS measurement is either pre-determined or configured by the network;
determining, by the UE, on its own execution of the inter-frequency/inter-system measurement or the GNSS measurement, and reporting measurement result(s) to the network and/or requesting the network for re-configuration of not-yet-executed measurement(s) after completion of the inter-frequency/inter-system measurement or the GNSS measurement.

According to some embodiments of the present disclosure, the method further includes:
determining, by the UE, whether ephemeris information turns invalid within the GNSS measurement gap duration, in accordance with the GNSS position validity duration, the GNSS measurement gap validity duration and ephemeris information validity duration;
obtaining, by the UE, new ephemeris information prior to the GNSS measurement gap, in an event that the ephemeris information turns invalid within the GNSS measurement gap duration.

In a second aspect, embodiments of the present disclosure provide an information transmission method, including: receiving, by a network device, a first message from a UE, wherein the first message includes at least one of the following pieces of information:
no GNSS measurement execution by the UE;
skipping next GNSS measurement by the UE;
cause(s) for no GNSS measurement execution or skipping next GNSS measurement;
preference regarding GNSS measurement gap configuration for the UE;
mobility information;
requesting a network for GNSS measurement gap configuration;
GNSS position validity duration;
GNSS measurement successful completion;
new GNSS position validity duration or updated GNSS position validity duration;
GNSS measurement time duration;
identity(es) or index(es) of GNSS measurement execution gap configuration information for GNSS measurement execution;
autonomous GNSS measurement execution.

According to some embodiments of the present disclosure, the method further includes:
sending to the UE at least one set of GNSS measurement gap configuration, wherein the GNSS measurement gap configuration includes at least one of:
identity(es) or index(es) of GNSS measurement gap configuration;
GNSS measurement gap length(s);
periodicity(s) of GNSS measurement gap;
triggering condition(s)/triggering event(s) for GNSS measurement;
start time and/or complete time of GNSS measurement gap;
offset value(s) of start time and/or complete time of GNSS measurement gap relative to start time and/or complete time of GNSS position validity;
protection time of GNSS measurement gap.

According to some embodiments of the present disclosure, the information transmission method further includes at least one of the following:
sending to the UE GNSS measurement triggering information;
sending to the UE periodic GNSS measurement information.

According to some embodiments of the present disclosure, the GNSS measurement triggering information includes at least one of:
indicator for triggering the UE to execute GNSS measurement;
GNSS measurement gap configuration;
identity(es) or index(es) of GNSS measurement gap configuration.

According to some embodiments of the present disclosure, the preference regarding GNSS measurement gap configuration for the UE includes at least one of:
desirable GNSS measurement gap mode;
periodic or aperiodic GNSS measurement;
power consumption needs.

According to some embodiments of the present disclosure, when the first message comprises information regarding no GNSS measurement execution or skipping next GNSS measurement but does not comprise the new GNSS position validity duration or the updated GNSS position validity duration, determining that the new GNSS position validity duration or the updated GNSS position validity duration of the UE is the same as current GNSS position validity duration or twice as current GNSS position validity duration; or,
when the first message comprises information regarding the GNSS measurement successful completion but does not comprise the new GNSS position validity duration or the updated GNSS position validity duration, determining that the new GNSS position validity duration or the updated GNSS position validity duration of the UE is the same as current GNSS position validity duration or twice as current GNSS position validity duration.

According to some embodiments of the present disclosure, the method further includes:
sending, by the network device, to the UE an indicator used to indicate permission for autonomous GNSS measurement entered by the UE.

According to some embodiments of the present disclosure, the desirable GNSS measurement gap mode includes at least one of:
start time of GNSS measurement gap being within the GNSS position validity duration or at complete time of the GNSS position validity duration of the UE;
start time of GNSS measurement gap being after complete time of the GNSS position validity duration of the UE;
complete time of GNSS measurement gap being within the GNSS position validity duration or at complete time of the GNSS position validity duration of the UE;
no overlapping between the GNSS measurement gap and the GNSS position validity duration of the UE;
partially overlapping between the GNSS measurement gap and the GNSS position validity duration of the UE;
the GNSS measurement gap being entirely within the GNSS position validity duration of the UE.

According to some embodiments of the present disclosure, the method further includes:
sending, by the network device, inter-frequency/inter-system measurement configuration information, such that there is no overlap between inter-frequency/intersystem measurement gap and the GNSS measurement gap or the UE is able to complete the inter-frequency/inter-system measurement and the GNSS measurement.

According to some embodiments of the present disclosure, the method further includes:
sending, by the network device, inter-frequency/inter-system measurement configuration information;
when there is overlap between inter-frequency/inter-system measurement gap and the GNSS measurement gap:
   sending to the UE a priority between the inter-frequency/inter-system measurement and the GNSS measurement;
   receiving measurement result(s) of the inter-frequency/inter-system measurement or measurement result(s) of the GNSS measurement reported by the UE;
   re-configuring configuration information of not-yet-executed measurement(s) and sending the re-configured configuration information to the UE.

In a third aspect, embodiments of the present disclosure provide a UE, including a transceiver and a processor, wherein the transceiver is configured to send a first message to a network, wherein the first message includes at least one of the following pieces of information:
no Global Navigation Satellite System (GNSS) measurement execution by the UE;
skipping next GNSS measurement by the UE;
cause(s) for no GNSS measurement execution or skipping next GNSS measurement;
preference regarding GNSS measurement gap configuration for the UE;
mobility information;
requesting the network for GNSS measurement gap configuration;
GNSS position validity duration;
GNSS measurement successful completion;
new GNSS position validity duration or updated GNSS position validity duration;
GNSS measurement time duration;
identity(es) or index(es) of GNSS measurement execution gap configuration information for GNSS measurement execution;
autonomous GNSS measurement execution.

In a fourth aspect, embodiments of the present disclosure provide a UE including a memory, a processor, and a computer program stored in the memory and executed by the processor, wherein the computer program is executed by the processor so as to implement the steps in the method according to the first aspect.

In a fifth aspect, embodiments of the present disclosure provide a network device, including a transceiver and a processor, wherein the transceiver is configured to receive a first message from a UE, wherein the first message comprises at least one of the following pieces of information:
no GNSS measurement execution by the UE;
skipping next GNSS measurement by the UE;
cause(s) for no GNSS measurement execution or skipping next GNSS measurement;
preference regarding GNSS measurement gap configuration for the UE;
mobility information;
requesting a network for GNSS measurement gap configuration;
GNSS position validity duration;
GNSS measurement successful completion;
new GNSS position validity duration or updated GNSS position validity duration;
GNSS measurement time duration;
identity(es) or index(es) of GNSS measurement execution gap configuration information for GNSS measurement execution;
autonomous GNSS measurement execution.

In a sixth aspect, embodiments of the present disclosure provide a network device including a memory, a processor, and a computer program stored in the memory and executed by the processor, wherein the computer program is executed by the processor so as to implement the steps in the method according to the second aspect.

In a seventh aspect, embodiments of the present disclosure provide a computer-readable storage medium storing therein a computer program, wherein the computer program is executed by a processor so as to implement the steps in the above methods.

By comparison with the related art, the information transmission methods, UEs, network devices, and storage media provided by the embodiments of the present disclosure can assist in realizing GNSS measurements configuration for the UE. Additionally, the embodiments of the present disclosure can reduce unnecessary GNSS measurements, further lowering the UE's power consumption. Furthermore, these embodiments configure one or more sets of GNSS measurement gap configuration, allowing the network or the UE to determine when to perform GNSS measurements. The UE reports the first message to the network as a reference for configuring the GNSS measurement gap, thereby supporting IoT terminals in re-acquiring GNSS positioning during long transmission periods and improving system flexibility. Moreover, the embodiments of the present disclosure also reduce or avoid overlaps between GNSS measurements and data transmission or inter-frequency/inter-system measurements by means of setting the protection time, configuring priorities between GNSS measurement gap(s) and inter-frequency/inter-system measurement gap(s), and so forth.

### Brief description of the drawings

By reading the detailed descriptions of the preferred embodiments below, various other advantages and benefits will become apparent to those skilled in the art. The accompanying drawings are provided for the purpose of illustrating the preferred embodiments and should not be construed as limiting the present disclosure in any way. Furthermore, the same reference numbers are used throughout the drawings to denote the same components. In the drawings:
**FIG. 1** is a flowchart illustrating the information transmission method of the present disclosure when applied to the UE side;
**FIG. 2** is an example diagram illustrating the skipping of GNSS measurements in the preferred embodiment;
**FIG. 3** is one of the example diagrams of the GNSS measurement gap mode in the preferred embodiment;
**FIG. 4** is another example diagram of the GNSS measurement gap mode in the preferred embodiment;
**FIG. 5** is a third example diagram of the GNSS measurement gap mode in the preferred embodiment;
**FIG. 6** is a fourth example diagram of the GNSS measurement gap mode in the preferred embodiment;
**FIG. 7** is a fifth example diagram of the GNSS measurement gap mode in the preferred embodiment;
**FIG. 8** is an example diagram illustrating the protection time in the preferred embodiment;
**FIG. 9** is a flowchart illustrating the information transmission method of the present disclosure when applied to the network device side;
**FIG. 10** is a schematic structural diagram of a UE in one embodiment of the present disclosure;
**FIG. 11** is a schematic structural diagram of a UE in another embodiment of the present disclosure;
**FIG. 12** is a schematic structural diagram of a network device in one embodiment of the present disclosure;
**FIG. 13** is a schematic structural diagram of a network device in another embodiment of the present disclosure;
**FIG. 14** is a schematic structural diagram of a UE in yet another embodiment of the present disclosure;
**FIG. 15** is a schematic structural diagram of a network device in yet another embodiment of the present disclosure.

### Detailed description

The exemplary embodiments of the present disclosure will be described in more detail with reference to the accompanying drawings below. Although the exemplary embodiments of the present disclosure are shown in the drawings, it should be understood that the present disclosure can be implemented in various forms and should not be limited to the embodiments described herein. Rather, these embodiments are provided to facilitate a thorough understanding of the present disclosure and to fully convey the scope of the present disclosure to those skilled in the art.

In the present disclosure, the terms "first," "second," etc., used in the specification and claims are intended to distinguish similar objects and are not necessarily used to describe a specific order or sequence. It should be understood that such data can be interchangeable as appropriate, allowing the embodiments described herein to be implemented in a sequence other than that illustrated or described herein. Furthermore, the terms "including" and "having," along with any variations thereof, are intended to cover non-exhaustive inclusions. For example, processes, methods, systems, products, or devices that include a series of steps or units does not have to be limited to those steps or units that are clearly listed; it can also include other steps or units that are inherent to those processes, methods, products, or devices without being clearly listed. In the specification and claims, "and/or" indicates at least one of the connected objects.

In the present embodiment of the disclosure, a network can configure parameters such as the GNSS measurement gap for the UE by considering assistance information reported by the UE, such as the GNSS position validity duration, the GNSS measurements duration, and so forth, thereby configuring one or more sets of GNSS measurement gap configuration for the UE.

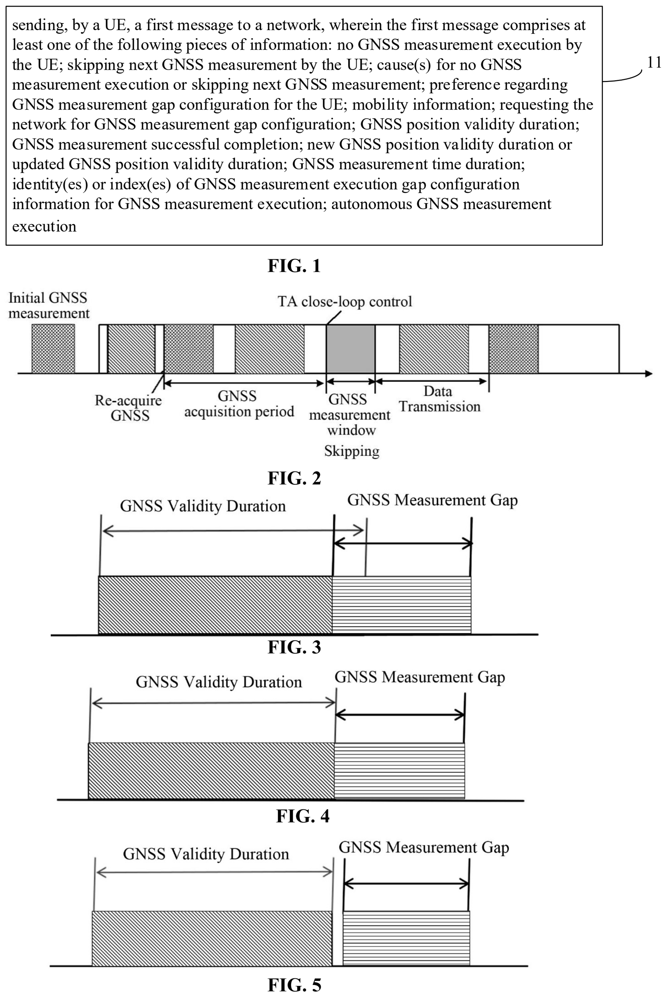

With reference to **FIG. 1****,** an information transmission method provided in the present embodiment of the disclosure, when applied to a UE, such as an IoT UE side, comprises:

Step 11: The UE sends a first message to the network device. The first message contains therein at least one of the following pieces of information:
(1) no GNSS measurement execution by the UE;
(2) skipping next GNSS measurement by the UE;
(3) cause(s) for no GNSS measurement execution or skipping next GNSS measurement;
(4) preference regarding GNSS measurement gap configuration for the UE;
(5) mobility information;
(6) requesting the network for GNSS measurement gap configuration;
(7) GNSS position validity duration;
(8) GNSS measurement successful completion;
(9) new GNSS position validity duration or updated GNSS position validity duration;
(10) GNSS measurement time duration;
(11) identity(es) or index(es) of GNSS measurement execution gap configuration information for GNSS measurement execution;
(12) autonomous GNSS measurement execution.

In the above step, the first message may contain therein one or more of the items listed in items (1) to (12). The information contained in the first message is used by the network device (e.g., a base station) to determine whether to configure a GNSS measurement gap for the UE, thereby facilitating the GNSS measurements configuration for the UE, or to determine the UE's new GNSS position validity duration to maintain consistency with the UE.

In this embodiment, the UE can determine whether to execute GNSS measurements or decide to skip the next GNSS measurement based on one or more of the GNSS position validity duration, UE mobility information, uplink synchronization state, and other assistance information. The UE mobility information may include one or more of the UE's speed, acceleration, and movement direction. The uplink synchronization state indicates whether the UE can maintain uplink synchronization through TA closed-loop control. Other assistance information may include UE internal capability information, remaining battery power, and the like.

Optionally, in this embodiment, when the UE determines not to perform GNSS measurements or to skip the next GNSS measurement, the first message may carry one or more of the items listed in items (1) to (7), and (9). In addition, when the UE determines to perform GNSS measurements or not to skip the next GNSS measurement, the first message may include one or more of the items listed in items (4) to (12).

For example, if the GNSS position validity duration is longer than a preset first duration, the UE determines not to perform GNSS measurements or decides to skip the next GNSS measurement. In addition, when the GNSS position validity duration is shorter than a preset second duration, the UE determines to perform GNSS measurements or decides not to skip the next GNSS measurement.

As another example, the UE can determine not to perform GNSS measurements or decide to skip the next GNSS measurement based on its uplink synchronization state, such that when it can maintain uplink synchronization, the UE determines not to perform GNSS measurements or decides to skip the next GNSS measurement. When it cannot maintain uplink synchronization, the UE determines to perform GNSS measurements or decides not to skip the next GNSS measurement. As shown in FIG. 2, the UE executes periodic GNSS measurements. When it can maintain uplink synchronization through TA closed-loop control, the UE can skip the GNSS measurement window, i.e. the UE does not perform GNSS measurements during that window to reduce UE's power consumption.

As another example, the UE can determine whether to perform GNSS measurements based on its capability or remaining battery power. For instance, when its capability does not support GNSS measurements or when the remaining battery power is below a preset threshold, the UE determines not to perform GNSS measurements. In this case, the UE can send the first message containing the information described in item (1) to the network, allowing the network to cancel the GNSS measurement gap configuration for the UE.

As another example, the UE can determine to skip the next GNSS measurement based on mobility information when its position has not changed significantly, thereby saving power. In this case, the UE can send the first message to the network containing the information described in item (2). Here, the next GNSS measurement refers to the nearest GNSS measurement after the current time. Thus, when the UE is stationary or moving at a low speed, frequent updates to GNSS positioning are unnecessary. The UE can maintain uplink synchronization through GNSS measurement gap configuration(s) and TA closed-loop adjustment(s), thereby reducing unnecessary GNSS measurement(s), further lowering power consumption, and reducing data transmission latency.

Additionally, the first message can also include the cause(s) for not performing GNSS measurements or skipping the next GNSS measurement.

When the first message contains information indicating that the UE does not need to perform the next GNSS measurement, the network device, upon receiving the first message, will know that the UE does not require the next GNSS measurement. At this time, the network device will not transmit GNSS measurement gap configuration to the UE or trigger the UE to perform GNSS measurements, thereby allowing for continuous data transmission.

Furthermore, when the first message does not contain the new GNSS position validity duration or the updated GNSS position validity duration, the new or updated GNSS position validity duration is considered the same as the current GNSS position validity duration or is extended by a factor of two. In other words, at this time, the first message also implicitly indicates the new GNSS position validity duration or the updated GNSS position validity duration. Although the first message does not include the new or updated GNSS position validity duration, the network device, upon receiving the first message, determines that the new or updated GNSS position validity duration is the same as the current GNSS position validity duration or is twice as the current GNSS position validity duration.

For example, if the first message includes the information that the UE does not perform GNSS measurements or skips the next measurement and does not include the new GNSS position validity duration or the updated GNSS position validity duration, or if the first message includes an indication of successful GNSS measurement completion and does not include the new or updated GNSS position validity duration, the first message implicitly indicates that the new or updated GNSS position validity duration is the same as the current GNSS position validity duration or is twice as the current GNSS position validity duration. The network device, upon receiving the first message, determines that the new or updated GNSS position validity duration is the same as the current GNSS position validity duration, thus starting a new GNSS position validity duration that is the same length as the current GNSS position validity duration, which effectively doubles the current GNSS position validity duration. Alternatively, the network device may decide that the GNSS position validity duration is to be doubled upon receipt of the first message, extending the length of the current GNSS position validity duration by the same factor.

When the UE determines to perform GNSS measurements, it can send a first message to the network that includes the preference regarding GNSS measurement gap configuration for the UE described in item (4). Specifically, the preference information may include at least one of the following:
A. desirable GNSS measurement gap mode (gap pattern);
B. periodic or aperiodic GNSS measurement;
C. requirements on power consumption, such as a preference for high power-consumption, medium power-consumption, or low power-consumption GNSS measurements.

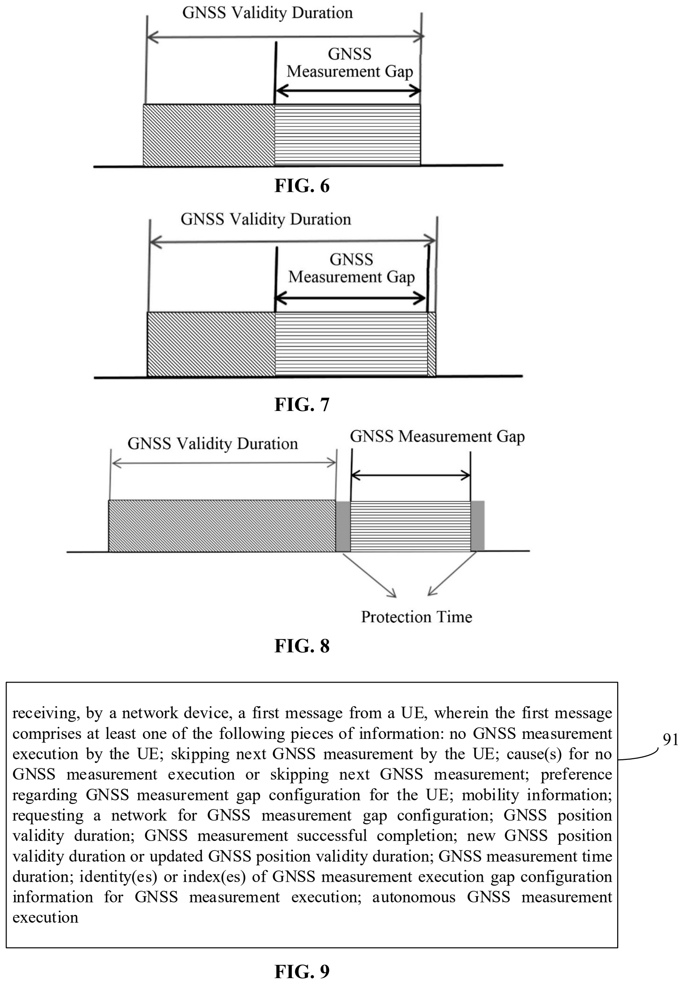

In this embodiment, based on the starting/ending positions of the gap, there can be multiple GNSS measurement gap modes. Specifically, the GNSS measurement gap mode may include at least one of the following:
1) The start time of the GNSS measurement gap falls within the GNSS position validity duration of the UE or at the complete time of the GNSS position validity duration. For example, as shown in FIG. 3, the start time of the GNSS measurement gap is within the GNSS position validity duration of the UE.
2) The start time of the GNSS measurement gap is at the expiration of the UE's GNSS position validity duration or after the expiration. For example, as shown in FIG. 4, the start time of the GNSS measurement gap occurs exactly at the expiration of the GNSS position validity duration of the UE. And FIG. 5 shows the start time of the GNSS measurement gap occurring after the expiration of the UE's GNSS position validity duration. This reduces the frequency of GNSS measurements and lowers measurement power consumption, thereby increasing the proportion of data transmission time.
3) The end time of the GNSS measurement gap falls within the UE's GNSS position validity duration or at the time of expiration. For example, FIG. 6 shows the end time of the GNSS measurement gap occurring exactly at the end of the UE's GNSS position validity duration, and FIG. 7 shows the end time within the GNSS position validity duration. This mode ensures that when the current GNSS position validity duration expires or before its expiration, there will be a new GNSS position validity duration available (i.e., GNSS measurement generates a new GNSS position validity duration).
4) The GNSS measurement gap does not overlap with the UE's GNSS position validity duration. For example, as shown in **FIG. 5****,** there is no overlap between the GNSS measurement gap and the UE's GNSS position validity duration.
5) The GNSS measurement gap partially overlaps with the UE's GNSS position validity duration. For example, as shown in **FIG. 3****,** there is a partial overlap between the GNSS measurement gap and the UE's GNSS position validity duration.
6) The GNSS measurement gap is entirely contained within the UE's GNSS position validity duration. For example, as shown in **FIG. 6** and **FIG. 7****,** the GNSS measurement gap is entirely contained within the GNSS position validity duration of the UE.

The above GNSS measurement gap modes can be predefined by the network and the UE, meaning both parties have predefined the same gap mode. Alternatively, the network can configure multiple gap modes for the UE to select one and inform the network of the chosen gap mode.

Additionally, in the present embodiment, GNSS measurements can be periodic or aperiodic. The UE can indicate to the network whether it prefers periodic or aperiodic GNSS measurements. Optionally, it can also specify information such as the expected period for periodic GNSS measurements.

Furthermore, the UE can indicate to the network its power consumption requirements, such as a desire for power consumption not exceeding a certain threshold, thus helping the network device determine the period of the GNSS measurement gap or the timing of the measurements to meet power consumption demands.

In this embodiment, the first message can also include mobility information, indicating the UE's speed, acceleration, and movement direction, thus assisting the network device in configuring the GNSS measurement gap configuration for the UE.

Moreover, the network device can also decide whether to indicated the UE to perform GNSS measurements or allow the UE to determine GNSS measurements based on the UE's preferences for GNSS measurement gap configuration and UE mobility information, among other assistance information. Optionally, when determining that the UE can decide on GNSS measurements autonomously, the network may send an indication to the UE for it to decide on GNSS measurements by itself. For example, if the UE's speed exceeds a certain preset threshold, the network may send an indication to allow the UE to decide whether to perform GNSS measurements on its own.

The first message can also include information requesting the network to configure a GNSS measurement gap, explicitly requesting the network to allocate a GNSS measurement gap for the UE, specifically including demand information for the GNSS measurement gap. The network will then configure the GNSS measurement gap accordingly.

Additionally, the first message may include the current GNSS position validity duration. For instance, for a stationary UE, the GNSS position validity duration may be infinite. In such a case, the UE only needs to report the GNSS position validity duration as infinite without any other assistant information. The network device, upon receiving this infinite GNSS position validity duration, will not configure a GNSS measurement gap for the UE since the UE does not need to perform further GNSS measurement(s).

The first message may also include an indicator of the successful completion of GNSS measurement. For instance, after the UE successfully completes GNSS measurement(s) and obtains a new GNSS position and a new or updated GNSS position validity duration, the UE can include this new or updated GNSS position validity duration in the first message and send the first message to the network. If the new or updated GNSS position validity duration is the same length as the current GNSS position validity duration, the first message may simply include therein an indicator of successful GNSS measurement completion without including the new or updated GNSS position validity duration. That is, implicitly indicating to the network that the new or updated GNSS position validity duration length is the same as the current GNSS position validity duration length. At this time, the network determines that the new GNSS position validity duration or the updated GNSS position validity duration is the same as current GNSS position validity duration or twice as current GNSS position validity duration.

Moreover, the first message may include an indicator concerning the GNSS measurement time duration to indicate when the UE performed the GNSS measurement. The first message may also include an identifier or index of the GNSS measurement gap configuration used for performing GNSS measurement(s), signifying the GNSS measurement gap configuration that the UE used for GNSS measurement(s).

The first message may also include an indicator for the autonomous execution of GNSS measurement(s), indicating that the UE has decided to perform GNSS measurement(s). The network may not provide GNSS measurement configuration to the UE, defaulting that the UE initiates GNSS measurement(s) when the current GNSS position validity duration expires, with the GNSS measurement gap aligning with the GNSS position measurement time duration reported by the UE.

Through the above steps, in this embodiment, the UE sends the first message to the network, which includes one or more pieces of the items listed in items (1) to (12). One or more of the items listed in items (1) to (12) are used by the network to determine whether it needs to configure the GNSS measurement gap for the UE, if necessary, to further determine the GNSS measurement gap configuration.

In this embodiment, the UE may send the first message after receiving the GNSS measurement gap configuration sent by the network or after receiving the first indication information sent by the network to trigger the UE to perform GNSS measurement(s), or autonomously send the first message to the network before receiving either the GNSS measurement gap configuration or the first indication information.

Optionally, in this embodiment, the UE can send the first message to the network before receiving the GNSS measurement gap configuration from the network, where the first message includes at least one of the following pieces of information: preference regarding GNSS measurement gap configuration for the UE; UE's mobility information; requesting the network for GNSS measurement gap configuration; indicator for the UE to perform autonomous GNSS measurement; GNSS measurement time duration, etc.

The network device, upon receiving the first message sent by the UE, will determine whether to configure GNSS measurement gap configuration for the UE and/or determine the GNSS measurement gap configuration.

For instance, if the network receives an indicator from the UE for autonomous GNSS measurement(s), there may be no need to configure GNSS measurement gap configuration, and the UE will autonomously initiate GNSS measurement(s) when the current GNSS position validity duration expires, aligning the GNSS measurement gap with the GNSS position measurement time duration included in the measurement configuration assistance information. Alternatively, if the network receives an indicator from the UE for autonomous GNSS measurement(s), the network can send an indicator to allow the UE to perform GNSS measurement(s) autonomously. Alternatively, the UE can initiate GNSS measurement(s) when the current GNSS position validity duration expires, with the GNSS measurement gap aligning with the GNSS position measurement time duration included in the measurement configuration assistance information.

As another example, when the UE requests the network to configure the GNSS measurement gap, the network can configure at least one set of GNSS measurement gap configuration for the UE. Specifically, if the UE also sends its preferences for GNSS measurement gap configurations along with UE's mobility information, the network can configure the at least one set of GNSS measurement gap configurations based on this information. The network then sends the at least one set of GNSS measurement gap configuration to the UE. After receiving this information, the UE can determine, based on one or more of the GNSS position validity duration, UE's mobility information, uplink synchronization state, and other assistance information, whether to perform GNSS measurement(s) or decide whether to skip the next GNSS measurement, and send the first message to the network device. The first message may include information indicating that the UE does not perform GNSS measurement(s), that the UE skips the next GNSS measurement, or the cause(s) for not performing GNSS measurement(s) or skipping the next GNSS measurement, etc.

When the UE determines to perform GNSS measurement(s), if there are multiple sets of GNSS measurement gap configuration, the UE can select one and inform the network of the chosen GNSS measurement gap configuration. For example, this may be done through an identifier or index of the GNSS measurement gap configuration included in the first message, indicating the selected GNSS measurement gap configuration. After performing the GNSS measurement(s), acquiring a new GNSS position validity duration (also called as an updated GNSS position validity duration), the UE sends the first message to the network, which can include indications of successful GNSS measurement completion and the new or updated GNSS position validity duration.

For aperiodic GNSS measurements (i.e., when the UE is unsure when the network will trigger GNSS measurements), if the network triggers GNSS measurements or sends GNSS measurement gap configurations but the UE estimates that the next GNSS measurement is unnecessary, upon receiving the first indication information sent by the network to trigger GNSS measurements or the GNSS measurement gap configurations issued by the network, the UE sends the first message to inform the network that whether it will skip the next GNSS measurement. Optionally, the first message may also carry cause(s) for skipping GNSS measurements, such as the UE being in low mobility or the GNSS position validity duration being unchanged or having minimal variation, and it may also carry predicted or updated GNSS position validity durations. Alternatively, a new message could be introduced as feedback to the first indication information triggering GNSS measurements, indicating that the UE has received that indication but will not perform GNSS measurements.

For periodic GNSS measurements (i.e., when the UE knows when to perform GNSS measurements), if the UE estimates that no GNSS measurement is necessary, it can autonomously send the first message before the next GNSS measurement gap to report relevant information (e.g., to skip/cancel the next measurement, optionally also including cause(s) for skipping or canceling, and a new GNSS position validity duration which can be the same as the original validity duration, etc.) to indicate to the network to cancel the next GNSS measurement.

In this embodiment, the network can also send at least one set of GNSS measurement gap configuration to the UE.

Optionally, the network may send at least one set of GNSS measurement gap configuration to the UE prior to Step 11. After receiving the GNSS measurement gap configuration, the UE will determine whether to perform GNSS measurements or decide to skip the next GNSS measurement based on one or more of the GNSS position validity duration, UE's mobility information, uplink synchronization state, and other assistance information, and then send the first message to the network. When performing GNSS measurements, the UE can determine which GNSS measurement gap configuration to use based on the at least one set of GNSS measurement gap configuration received. In other words, the at least one set of GNSS measurement gap configuration sent by the network will also serve to trigger the UE to perform GNSS measurements.

Optionally, the network device may also send at least one set of GNSS measurement gap configuration to the UE after Step 11-that is, after receiving the first message.

The GNSS measurement gap configuration includes at least one of:
1) identity(es) or index(es) of GNSS measurement gap configuration (such as gap pattern, configuration ID, or index) used to uniquely identify a set of GNSS measurement gap configuration;
2) GNSS measurement gap length(s);
3) periodicity(s) of GNSS measurement gap, such as periodic or aperiodic measurement gaps; for periodic measurement gaps, this may also include the period size;
4) triggering condition(s)/triggering event(s) for GNSS measurement, i.e., condition(s) or event(s) that trigger GNSS measurement(s);
5) start time and/or complete time of GNSS measurement gap;
6) offset value(s) of start time and/or complete time of GNSS measurement gap relative to start time and/or complete time of GNSS position validity; that is, this sixth item can specifically include one or more of: the offset of the start time of the GNSS measurement gap relative to the start time of the GNSS position validity duration expiration; the offset of the complete time of the GNSS measurement gap relative to the start time of the GNSS position validity duration expiration; the offset of the start time of the GNSS measurement gap relative to the complete time of the GNSS position validity duration expiration; and the offset of the complete time of the GNSS measurement gap relative to the complete time of the GNSS position validity duration expiration;
7) protection time of GNSS measurement gap.

In this embodiment, the network can trigger the UE to perform GNSS measurement(s), or the UE can autonomously decide to perform GNSS measurement(s).

Specifically, when the network triggers the UE to perform GNSS measurement(s), the network can send GNSS measurement trigger information to the UE to initiate the GNSS measurement(s). Upon receiving the GNSS measurement trigger information, the UE will determine whether to perform GNSS measurement(s) or skip the next GNSS measurement, and will send the first message to the network. This GNSS measurement trigger information includes at least one of the following:
(1) indicator for triggering the UE to perform GNSS measurement;
(2) GNSS measurement gap configuration;
(3) identity(es) or index(es) of GNSS measurement gap configuration.

The first item is an explicit indication that triggers the UE to perform GNSS measurement(s).

The second and third items are implicit indications that trigger the UE to perform GNSS measurement(s), i.e., by indicating the GNSS measurement gap configuration or its identifier or index to indicate the UE to perform GNSS measurement(s). If the UE determines to proceed with the GNSS measurement(s), it will utilize the GNSS measurement gap configuration indicated by the GNSS measurement trigger information.

For example, if the network provides only one set of GNSS measurement gap configuration to the UE but does not indicate periodic measurement(s), or indicates aperiodic measurement(s), or does not specify an exact measurement start time (either absolute time or relative time offset), then the UE will begin GNSS measurement(s) upon receiving this GNSS measurement gap configuration.

As another scenario, if the network provides multiple sets of gap configurations and needs the UE to perform GNSS measurement(s), it can indicate the UE to perform GNSS measurement(s) through Radio Resource Control (RRC) signaling, Medium Access Control Control Element (MAC CE), or Downlink Control Information (DCI). For example:
a. By sending an explicit indication to indicate the UE to perform measurements;
b. By sending an index to indicate which GNSS measurement gap configuration to use, implicitly indicating the UE to perform GNSS measurement(s);
c. By sending both an explicit indication and an index to indicate the UE to perform GNSS measurement(s) and indicating the GNSS measurement gap configuration to be used;
d. When indicating for the UE to perform measurement(s), if there is an update to the GNSS measurement gap configuration, it may also be sent to the UE, such as including the GNSS measurement gap configuration or updates (delta) to the GNSS measurement gap configuration;
e. A new MAC CE can be used to indicate that a specific MAC CE format includes a 1-bit flag indicating that this MAC CE is used to activate a certain GNSS measurement gap configuration, and optionally indicate the GNSS measurement gap configuration or its updates (delta).

When the UE decides to perform GNSS measurement(s) autonomously, it may operate as follows:
A. If the network configures a set of GNSS measurement gap configuration and indicates periodic measurements along with the time to start the first measurement, the UE will commence measurements at the indicated time. If periodic measurements are indicated but no start time is specified, it defaults to starting measurements when the GNSS position validity duration expires.
B. If the single or multiple sets of GNSS measurement gap configuration issued by the network includes triggering event(s) or condition(s) (which can vary for each configuration), the UE will initiate measurements once the triggering conditions are met; for instance, if the GNSS position validity duration expires or if corresponding triggering conditions configured for different mobility levels (e.g., high, medium, low) are met-such as measuring based on the first GNSS measurement gap configuration when the speed exceeds a threshold. In this case, the UE will perform GNSS measurements based on any of the GNSS measurement gap configurations when the triggering events or conditions are satisfied. If no triggering events or conditions exist, it may depend on the UE for actual implementation. Optionally, the network could send an instruction indicating that the UE can proceed with GNSS measurements autonomously.
C. Once the UE decides to initiate GNSS measurement(s), it needs to inform the network to prevent it from scheduling the UE for data transmission, inter-frequency measurement or other actions during the measurement period.
D. If multiple sets of GNSS measurement gap configurations are provided by the network, the UE will also need to inform which specific GNSS measurement gap configuration it has selected via an index or configuration ID.

Thus, in step 11, the UE sends the first message, which may include at least one of the following:
(1) The UE receives GNSS measurement trigger information from the network and determines whether to perform GNSS position measurement(s) or skip the next GNSS measurement, sending the first message to the network;
(2) The UE determines whether to perform GNSS position measurement(s) or skip the next GNSS measurement before periodic GNSS measurement and sends the first message to the network.

When determining not to perform GNSS measurement(s) or to skip the next GNSS measurement, the first message may include information indicating that the UE will not perform GNSS measurement(s) or that it will skip the next measurement.

In this embodiment, after the UE sends the first message, it may not have received the GNSS measurement gap configuration sent by the network. At this time, the UE can initiate GNSS measurement(s) autonomously when the GNSS position validity duration expires or completes, and the measurement time duration can be equal to the time duration the UE reported in the first message.

Furthermore, the network may indicate whether to allow the UE to perform autonomous measurement(s). In this case, the UE can also receive an indication from the network allowing the UE to perform autonomous GNSS measurement(s). Thus, after sending the first message, if the UE does not receive the GNSS measurement gap configuration from the network, it can perform with autonomous GNSS measurement(s).

To minimize overlap(s) between data transmission and GNSS measurements, this embodiment incorporates a protection time before and/or after the start of the GNSS measurement gap. Specifically, when configuring the GNSS measurement gap, the network will also configure a protection time for it. FIG. 8 provides an example of this protection time. During the protection time, the UE will refrain from data transmission or will only carry out data re-transmission without initiating new transmissions. Optionally, the protection time configuration can also be predefined. Specifically, the exact parameters for the protection time (e.g., length) can be transmitted along with the GNSS measurement gap configuration, or included in other messages, such as RRC signaling or System Information Block (SIB) messages, or stipulated by protocols. The network may configure the specific parameters for the protection time based on the UE's capabilities.

In addition to performing GNSS measurement(s), the UE may also need to perform inter-frequency/inter-system measurement(s). The order (time sequence) of receiving inter-frequency/inter-system measurement gaps and GNSS measurement gaps is not limited. If the UE receives inter-frequency/inter-system measurement gaps from the network that overlap with GNSS measurement gaps (i.e., there is an overlapping between the inter-frequency/inter-system measurement gap and the GNSS measurement gap), the UE may handle it in at least one of the following ways:
(1) The UE receives inter-frequency/inter-system measurement configuration from the network, where the inter-frequency/inter-system measurement gap overlaps with the GNSS measurement gap, and the lengths of both are set by the network based on the UE's capability to sequentially complete inter-frequency/inter-system measurements and GNSS measurements; the UE performs both measurements within the overlapping gaps and sends the results to the network.
(2) The UE prioritizes the measurements based on predefined or network-configured priority between inter-frequency/inter-system measurements and GNSS measurements; once the higher-priority measurement is completed, the UE reports the results to the network and/or requests to re-configure the lower-priority measurement. Optionally, after measurement is terminated, the UE can also inform the network of the cause of overlapping, indicating that the inter-frequency/inter-system measurement gap overlaps with the GNSS measurement gap. Here, the UE can obtain priority information from broadcast messages received from the network, or from GNSS measurement gap configuration, or from other signaling sent by the network.
(3) The UE autonomously decides to execute either inter-frequency/inter-system measurements or GNSS measurements, subsequently reporting the results and/or requesting the reconfiguration of any not-yet-executed measurement(s). Optionally, the UE can send the network device feedback regarding the overlapping cause(s) after completing the measurement(s), such as indicating that there is an overlap between the inter-frequency/inter-system measurement gap and the GNSS measurement gap.

Given the potential expiration of ephemeris information, the UE can determine whether the ephemeris information expires during the GNSS measurement gap based on the GNSS position validity duration, the GNSS measurement gap, and the validity duration of the ephemeris information. If the UE determines that the ephemeris information expires during the GNSS measurement gap, the UE will reacquire the ephemeris information before the GNSS measurement gap.

With reference to FIG. 9, the information transmission method provided in this embodiment when applied to a network device, such as a base station, includes:
Step 91: The network device receives the first message sent by the UE, where the first message includes at least one of the following pieces of information:
(1) no GNSS measurement execution by the UE;
(2) skipping next GNSS measurement by the UE;
(3) cause(s) for no GNSS measurement execution or skipping next GNSS measurement;
(4) preference regarding GNSS measurement gap configuration for the UE;
(5) mobility information;
(6) requesting the network for GNSS measurement gap configuration;
(7) GNSS position validity duration;
(8) GNSS measurement successful completion;
(9) new GNSS position validity duration or updated GNSS position validity duration;
(10) GNSS measurement time duration;
(11) identity(es) or index(es) of GNSS measurement execution gap configuration information for GNSS measurement execution;
(12) autonomous GNSS measurement execution.

Optionally, the UE's preference for GNSS measurement gap configuration may include at least one of the following:
A. desirable GNSS measurement gap mode (gap pattern);
B. periodic or aperiodic GNSS measurement;
C. power consumption needs, such as a preference for high power-consumption, medium power-consumption, or low power-consumption GNSS measurements.

In this embodiment, the GNSS measurement gap mode may include at least one of the following:
1) The start time of the GNSS measurement gap falls within the GNSS position validity duration of the UE or at the complete time of the GNSS position validity duration;
2) The start time of the GNSS measurement gap is at the expiration of the UE's GNSS position validity duration or after the expiration;
3) The complete time of the GNSS measurement gap falls within the UE's GNSS position validity duration or at the time of expiration;
4) The GNSS measurement gap does not overlap with the UE's GNSS position validity duration;
5) The GNSS measurement gap partially overlaps with the UE's GNSS position validity duration;
6) The GNSS measurement gap is entirely contained within the UE's GNSS position validity duration.

Through the above steps, based on the information contained in the first message, the network device can determine whether to configure the GNSS measurement gap for the UE.

For example, when the first message contains the information from item (1) or item (2), the network device can decide not to configure the GNSS measurement gap for the UE upon receiving the first message, refraining from sending GNSS measurement gap configuration to the UE or triggering the UE to perform GNSS measurements, thereby allowing for continued data transmission.

Optionally, if the first message does not contain the new GNSS position validity duration or the updated GNSS position validity duration, the new or updated GNSS position validity duration is treated as the same as the current GNSS position validity duration or extended by a factor of two. At this time, the network device determines that the new or updated GNSS validity duration is equivalent to the current GNSS validity duration, or it is twice as the current GNSS validity duration.

For example, if the first message contains information that the UE does not perform GNSS measurements or skips the next measurement and does not include the new GNSS position validity duration or the updated GNSS position validity duration or only contains an indication of successful GNSS measurement completion, the first message implicitly indicates that the new or updated GNSS position validity duration is the same as the current GNSS position validity duration or has doubled. Upon receiving the first message, the network device starts a new GNSS position validity duration of the same length as the current GNSS position validity duration, effectively doubling the current validity duration. Alternatively, upon receiving the first message, the network device may determine that the GNSS position validity duration is doubled, thus extending the length of the current GNSS position validity duration in the same manner.

In this embodiment, the network device may also send at least one set of GNSS measurement gap configuration to the UE. The GNSS measurement gap configuration may include at least one of the following:
1) identity(es) or index(es) of GNSS measurement gap configuration used to uniquely identify a set of GNSS measurement gap configuration;
2) GNSS measurement gap length(s);
3) periodicity(s) of GNSS measurement gap, such as periodic or aperiodic measurement gaps; for periodic measurement gaps, this may also include the period size;
4) triggering condition(s)/triggering event(s) for GNSS measurement, i.e., condition(s) or event(s) that trigger GNSS measurement(s);
5) start time and/or complete time of GNSS measurement gap;
6) offset value(s) of start time and/or complete time of GNSS measurement gap relative to start time and/or complete time of GNSS position validity;
7) protection time of GNSS measurement gap.

Optionally, in this embodiment, the network device can trigger the UE to perform GNSS measurement(s), or the UE can autonomously decide to perform GNSS measurement(s). Before Step 91, the network device may send GNSS measurement trigger information to the UE or send periodic GNSS measurement information. After the UE receives GNSS measurement trigger information or periodic GNSS measurement information, it will determine whether to perform GNSS measurement(s) or skip the next GNSS measurement based on one or more of the GNSS position validity duration, UE's mobility information, uplink synchronization state, and other assistance information, and then send the first message to the network device. The network device will then receive the first message in step 91. When executing GNSS measurement(s), the UE may determine the GNSS measurement gap configuration used for GNSS measurement(s) based on the at least one set of GNSS measurement gap configuration received and proceed to perform GNSS measurement(s). In this way, the at least one set of GNSS measurement gap configuration sent by the network device will also serve to trigger the UE to perform GNSS measurement(s).

Additionally, the network device may also send at least one set of GNSS measurement gap configuration to the UE after Step 91, that is, after receiving the first message.

When the network device triggers the UE to perform GNSS measurement(s), it can send the GNSS measurement trigger information to initiate GNSS measurement(s). This GNSS measurement trigger information includes at least one of the following:
(1) indicator for triggering the UE to execute GNSS measurement;
(2) GNSS measurement gap configuration;
(3) identity(es) or index(es) of GNSS measurement gap configuration.

The first item is an explicit indication that triggers the UE to perform GNSS measurement(s). The second and third items provide implicit indications to trigger the UE to perform GNSS measurement(s) i.e., by indicating the GNSS measurement gap configuration or its identifier or index to indicate the UE to perform GNSS measurement(s). If the UE determines to proceed with the GNSS measurement(s), it will utilize the GNSS measurement gap configuration indicated by the GNSS measurement trigger information.

In this embodiment, the network device may also perform at least one of the following actions before Step 91:
(1) sending GNSS measurement trigger information to the UE to allow the UE to determine whether to perform GNSS position measurement(s) or skip the next GNSS measurement, to allow the UE to transmit the first message to the network device. For instance, if the UE decides not to perform GNSS measurement(s) or skip the next GNSS measurement, the first message can include this information concerning that the UE will not perform GNSS measurement(s) or skip the next GNSS measurement.
(2) sending periodic GNSS measurement information to the UE. Thus, before the periodic GNSS measurements, the UE can determine whether to perform GNSS position measurement(s) or skip the next GNSS measurement and send the first message to the network device.

In this embodiment, the network device can determine whether to indicate the UE to perform GNSS measurement(s) or allow it to determine autonomously based on the UE's preferences for GNSS measurement gap configuration and UE's mobility information, along with other assistance information. Optionally, when determining that the UE can autonomously decide on GNSS measurement(s), the network device may send an indication allowing the UE to perform autonomous GNSS measurement(s). For example, if the UE's speed exceeds a predetermined threshold, an indication may be sent to signal that the UE can decide whether to carry out GNSS measurements on its own.

When it is necessary to configure inter-frequency/inter-system measurement gaps for the UE, as an implementation, the network device can send inter-frequency/inter-system measurement configuration to the UE to ensure that there are no overlaps between the inter-frequency/inter-system measurement gaps and the GNSS measurement gaps, or to ensure that the UE is capable of completing both inter-frequency/inter-system measurements and GNSS measurements. The inter-frequency/inter-system measurement gaps and the GNSS measurement gaps can either be no overlap, or they may overlap with each other. In the latter case, the lengths of both the inter-frequency/inter-system measurement gap and the GNSS measurement gap will be set based on the UE's capability to sequentially complete them. The network device will then receive the results of the inter-frequency/inter-system measurements and GNSS measurements reported by the UE.

As another implementation, when there is an overlap between the inter-frequency/inter-system measurement gap and the GNSS measurement gap, the network device may send the priority of these measurements to the UE-this may be done through broadcasting the priority information or by arranging it in the GNSS measurement gap configuration or sending it through other signaling to the UE. The network device will then receive the reported results of the inter-frequency/inter-system measurements and GNSS measurements and will also reconfigure any measurements that were not executed and send this information to the UE.

The various methods of the disclosed embodiments have been described above. Next, devices for implementing the above methods described will be provided.

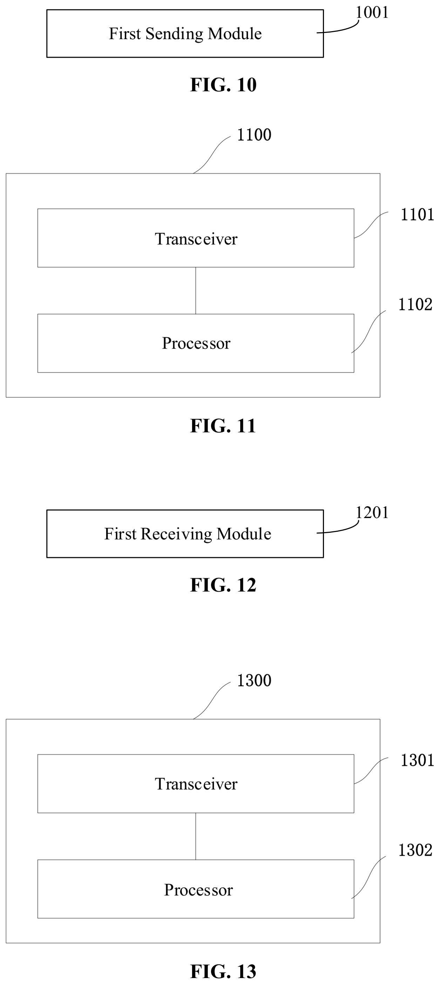

Referring to **FIG. 10****,** the disclosed embodiment also provides a UE, which includes:
**First Sending Module 1001:** used to send a first message to the network, wherein the first message includes at least one of the following pieces of information:
no GNSS measurement execution by the UE;
skipping next GNSS measurement by the UE;
cause(s) for no GNSS measurement execution or skipping next GNSS measurement;
preference regarding GNSS measurement gap configuration for the UE;
mobility information;
requesting the network for GNSS measurement gap configuration;
GNSS position validity duration;
GNSS measurement successful completion;
new GNSS position validity duration or updated GNSS position validity duration;
GNSS measurement time duration;
identity(es) or index(es) of GNSS measurement execution gap configuration information for GNSS measurement execution;
autonomous GNSS measurement execution.

Optionally, the UE further includes:
**First Determination Module:** used to determine whether to execute GNSS measurement or determining whether to skip next GNSS measurement, in accordance with one or more of the GNSS position validity duration, the mobility information, uplink synchronization state, or other assistant information.

Optionally, the UE further includes:
**First Receiving Module:** used to receive at least one set of GNSS measurement gap configuration, wherein the GNSS measurement gap configuration comprises at least one of:
identity(es) or index(es) of GNSS measurement gap configuration;
GNSS measurement gap length(s);
periodicity(s) of GNSS measurement gap;
triggering condition(s)/triggering event(s) for GNSS measurement;
start time and/or complete time of GNSS measurement gap;
offset value(s) of start time and/or complete time of GNSS measurement gap relative to start time and/or complete time of GNSS position validity;
protection time of GNSS measurement gap.

Optionally, the first sending module is also used to send the first message, which includes at least one of the following:
determining whether to execute GNSS position measurement or skip next GNSS measurement upon receipt of GNSS measurement triggering information sent by the network, and sending the first message to the network;
determining whether to execute GNSS position measurement or skip next GNSS measurement prior to execution of periodic GNSS measurement, and sending the first message to the network.

Optionally, the GNSS measurement triggering information includes at least one of the following:
indicator for triggering the UE to execute GNSS measurement;
GNSS measurement gap configuration;
identity(es) or index(es) of GNSS measurement gap configuration.

Optionally, the UE's preference regarding GNSS measurement gap configuration for the UE includes at least one of:
desirable GNSS measurement gap mode;
periodic or aperiodic GNSS measurement;
power consumption needs.

Optionally, when the first message includes information regarding no GNSS measurement execution or skipping next GNSS measurement but does not include the new GNSS position validity duration or the updated GNSS position validity duration, the first message is used to implicitly indicate that the new GNSS position validity duration or the updated GNSS position validity duration is the same as current GNSS position validity duration or twice as current GNSS position validity duration; or, when the first message includes information regarding the GNSS measurement successful completion but does not include the new GNSS position validity duration or the updated GNSS position validity duration, the first message is used to implicitly indicate that the new GNSS position validity duration or the updated GNSS position validity duration is the same as current GNSS position validity duration or twice as current GNSS position validity duration.

Optionally, the UE also includes:
**First Measurement Module:** used to autonomously perform GNSS measurement(s) when the UE has not received the GNSS measurement gap configuration sent by the network device and when the GNSS position validity duration times out or completes, with the measurement time duration being equal to the GNSS measurement time reported by the UE in the first message.

Optionally, the UE also includes:
**Second Receiving Module:** used to receive indication information from the network device, where the indication information indicates that the UE is allowed to perform autonomous GNSS measurements.

Optionally, the GNSS measurement gap mode includes at least one of the following:
start time of GNSS measurement gap being within the GNSS position validity duration or at complete time of the GNSS position validity duration of the UE;
start time of GNSS measurement gap being after complete time of the GNSS position validity duration of the UE;
complete time of GNSS measurement gap being within the GNSS position validity duration or at complete time of the GNSS position validity duration of the UE;
no overlapping between the GNSS measurement gap and the GNSS position validity duration of the UE;
partially overlapping between the GNSS measurement gap and the GNSS position validity duration of the UE;
the GNSS measurement gap being entirely within the GNSS position validity duration of the UE.

Optionally, the UE does not perform data transmission or only retransmits data during the protection time; where the protection time configuration is predefined or configured by the network device for the UE.

Optionally, the UE also includes:
**Second Processing Module:** used for executing at least one of the following when receiving inter-frequency/inter-system measurement configuration information sent by the network device, and when the inter-frequency/inter-system measurement gap overlaps with the GNSS measurement gap:
executing the higher-priority measurement between the inter-frequency/intersystem measurement and the GNSS measurement, and reporting measurement result(s) to the network and/or requesting the network for re-configuration of the lower-priority measurement after completion of the higher-priority measurement, wherein the priority between the inter-frequency/inter-system measurement and the GNSS measurement is either pre-determined or configured by the network;
determining on its own execution of the inter-frequency/inter-system measurement or the GNSS measurement, and reporting measurement result(s) to the network and/or requesting the network for re-configuration of not-yet-executed measurement(s) after completion of the inter-frequency/inter-system measurement or the GNSS measurement.

Optionally, the UE also includes:
**First Acquisition Module:** used to determine whether ephemeris information turns invalid within the GNSS measurement gap duration, in accordance with the GNSS position validity duration, the GNSS measurement gap validity duration and ephemeris information validity duration; acquire new ephemeris information prior to the GNSS measurement gap, in an event that the ephemeris information turns invalid within the GNSS measurement gap duration.

It should be noted that the devices in this embodiment correspond to the methods applied on the UE side, and the implementation approaches in the above embodiments are also applicable to the device embodiments, achieving the same technical effects. The devices provided in these disclosed embodiments can implement all method steps achieved by the method embodiments, and can achieve the same technical effect, so there is no need to specifically elaborate on the same parts and beneficial effects as in this embodiment.

Referring to **FIG. 11****,** the disclosed embodiment also provides a UE 1100, including:
**Transceiver 1101** and **Processor 1102;** the transceiver 1101 is configured to send a first message to a network, wherein the first message comprises at least one of the following pieces of information:
no GNSS measurement execution by the UE;
skipping next GNSS measurement by the UE;
cause(s) for no GNSS measurement execution or skipping next GNSS measurement;
preference regarding GNSS measurement gap configuration for the UE;
mobility information;
requesting the network for GNSS measurement gap configuration;
GNSS position validity duration;
GNSS measurement successful completion;
new GNSS position validity duration or updated GNSS position validity duration;
GNSS measurement time duration;
identity(es) or index(es) of GNSS measurement execution gap configuration information for GNSS measurement execution;
autonomous GNSS measurement execution.

Optionally, the processor is also used to:
determine whether to perform GNSS measurement(s) or determine if the next GNSS measurement is to be skipped based on one or more of GNSS position validity duration, UE's mobility information, UE's uplink synchronization state, and other assistance information.

Optionally, the transceiver is also used to:
determine whether to execute GNSS position measurement or skip next GNSS measurement upon receipt of GNSS measurement triggering information sent by the network, and sending the first message to the network;
determine whether to execute GNSS position measurement or skip next GNSS measurement prior to execution of periodic GNSS measurement, and sending the first message to the network.

Optionally, the GNSS measurement triggering information includes at least one of:
indicator for triggering the UE to execute GNSS measurement;
GNSS measurement gap configuration;
identity(es) or index(es) of GNSS measurement gap configuration.

Optionally, the preference regarding GNSS measurement gap configuration for the UE includes at least one of:
desirable GNSS measurement gap mode;
periodic or aperiodic GNSS measurement;
power consumption needs.

Optionally, when the first message includes information regarding no GNSS measurement execution or skipping next GNSS measurement but does not include the new GNSS position validity duration or the updated GNSS position validity duration, the first message is used to implicitly indicate that the new GNSS position validity duration or the updated GNSS position validity duration is the same as current GNSS position validity duration or twice as current GNSS position validity duration; or, when the first message includes information regarding the GNSS measurement successful completion but does not include the new GNSS position validity duration or the updated GNSS position validity duration, the first message is used to implicitly indicate that the new GNSS position validity duration or the updated GNSS position validity duration is the same as current GNSS position validity duration or twice as current GNSS position validity duration.

Optionally, the processor is also used to:
in an event that the UE fails to receive the at least one set of GNSS measurement gap configuration sent by the network, execute autonomous GNSS measurement, when the GNSS position validity duration expires or completes, wherein measurement time is the same as the time for GNSS measurement reported within the first message by the UE.

Optionally, the transceiver is also used to:
receive an indicator used to indicate autonomous GNSS measurement is enabled by the network.

Optionally, the GNSS measurement gap mode includes at least one of the following:
start time of GNSS measurement gap being within the GNSS position validity duration or at complete time of the GNSS position validity duration of the UE;
start time of GNSS measurement gap being after complete time of the GNSS position validity duration of the UE;
complete time of GNSS measurement gap being within the GNSS position validity duration or at complete time of the GNSS position validity duration of the UE;
no overlapping between the GNSS measurement gap and the GNSS position validity duration of the UE;
partially overlapping between the GNSS measurement gap and the GNSS position validity duration of the UE;
the GNSS measurement gap being entirely within the GNSS position validity duration of the UE.

Optionally, the UE does not perform data transmission or only retransmits data during the protection time; where the configuration information for the protection time is predefined or configured by the network device for the UE.

Optionally, when the UE is configured with inter-frequency/inter-system measurement by the network, and there is overlap between inter-frequency/inter-system measurement gap and the GNSS measurement gap, the processor is further configured to do at least one of:
executing the higher-priority measurement between the inter-frequency/intersystem measurement and the GNSS measurement, and reporting measurement result(s) to the network and/or requesting the network for re-configuration of the lower-priority measurement after completion of the higher-priority measurement, wherein the priority between the inter-frequency/inter-system measurement and the GNSS measurement is either pre-determined or configured by the network;
determining on its own execution of the inter-frequency/inter-system measurement or the GNSS measurement, and reporting measurement result(s) to the network and/or requesting the network for re-configuration of not-yet-executed measurement(s) after completion of the inter-frequency/inter-system measurement or the GNSS measurement.

Optionally, the processor is also used to do the following:
determining whether ephemeris information turns invalid within the GNSS measurement gap duration, in accordance with the GNSS position validity duration, the GNSS measurement gap validity duration and ephemeris information validity duration;
obtaining new ephemeris information prior to the GNSS measurement gap, in an event that the ephemeris information turns invalid within the GNSS measurement gap duration.

It should be noted that the devices in these embodiments correspond to the methods applied on the network side. The implementation approaches in the above embodiments are applicable to these device embodiments and can achieve the same technical effects. The devices provided in the disclosed embodiments can implement all method steps achieved by the method embodiments, achieving the same technical effect, and there is no need to specifically elaborate on the same parts and beneficial effects as in these embodiments.

Refer to **FIG. 12****,** the disclosed embodiment also provides a network device, including:
**First Receiving Module 1201:** used to receive the first message sent by the UE, where the first message includes at least one of the following pieces of information:
no GNSS measurement execution by the UE;
skipping next GNSS measurement by the UE;
cause(s) for no GNSS measurement execution or skipping next GNSS measurement;
preference regarding GNSS measurement gap configuration for the UE;
mobility information;
requesting a network for GNSS measurement gap configuration;
GNSS position validity duration;
GNSS measurement successful completion;
new GNSS position validity duration or updated GNSS position validity duration;
GNSS measurement time duration;
identity(es) or index(es) of GNSS measurement execution gap configuration information for GNSS measurement execution;
autonomous GNSS measurement execution.

Optionally, the network device further includes:
**First Sending Module:** used to send at least a set of GNSS measurement gap configuration to the UE, where the GNSS measurement gap configuration includes at least one of the following:
identity(es) or index(es) of GNSS measurement gap configuration;
GNSS measurement gap length(s);
periodicity(s) of GNSS measurement gap;
triggering condition(s)/triggering event(s) for GNSS measurement;
start time and/or complete time of GNSS measurement gap;
offset value(s) of start time and/or complete time of GNSS measurement gap relative to start time and/or complete time of GNSS position validity;
protection time of GNSS measurement gap.

Optionally, the network device further includes:
**Second Sending Module:** used to execute at least one of the following:
sending to the UE GNSS measurement triggering information;
sending to the UE periodic GNSS measurement information.

Optionally, GNSS measurement triggering information includes at least one of the following:
indicator for triggering the UE to execute GNSS measurement;
GNSS measurement gap configuration;
identity(es) or index(es) of GNSS measurement gap configuration.

Optionally, the UE's preference regarding GNSS measurement gap configuration for the UE includes at least one of:
desirable GNSS measurement gap mode;
periodic or aperiodic GNSS measurement;
power consumption needs.

Optionally, the network device further includes:
**First Determination Module:** used to when the first message comprises information regarding no GNSS measurement execution or skipping next GNSS measurement but does not comprise the new GNSS position validity duration or the updated GNSS position validity duration, determine that the new GNSS position validity duration or the updated GNSS position validity duration of the UE is the same as current GNSS position validity duration or twice as current GNSS position validity duration; or, when the first message comprises information regarding the GNSS measurement successful completion but does not comprise the new GNSS position validity duration or the updated GNSS position validity duration, determine that the new GNSS position validity duration or the updated GNSS position validity duration of the UE is the same as current GNSS position validity duration or twice as current GNSS position validity duration.

Optionally, the network device further includes:
**Third Sending Module:** used to send to the UE an indicator used to indicate permission for autonomous GNSS measurement entered by the UE.

Optionally, the GNSS measurement gap mode includes at least one of the following:
start time of GNSS measurement gap being within the GNSS position validity duration or at complete time of the GNSS position validity duration of the UE;
start time of GNSS measurement gap being after complete time of the GNSS position validity duration of the UE;
complete time of GNSS measurement gap being within the GNSS position validity duration or at complete time of the GNSS position validity duration of the UE;
no overlapping between the GNSS measurement gap and the GNSS position validity duration of the UE;
partially overlapping between the GNSS measurement gap and the GNSS position validity duration of the UE;
the GNSS measurement gap being entirely within the GNSS position validity duration of the UE.

Optionally, the network device further includes:
**Fourth Sending Module:** used to send inter-frequency/inter-system measurement configuration information, such that there is no overlap between inter-frequency/inter-system measurement gap and the GNSS measurement gap or the UE is able to complete the inter-frequency/inter-system measurement and the GNSS measurement;
**Second Receiving Module:** used to receive results reported by the UE for inter-frequency/inter-system measurements and GNSS measurements.

Optionally, the network device further includes:
**Fifth Sending Module:** used to send inter-frequency/inter-system measurement configuration information to the UE, where the inter-frequency/inter-system measurement gap has overlapping parts with the GNSS measurement gap, and the lengths of the inter-frequency/inter-system measurement gap and the GNSS measurement gap cannot be sequentially completed;
**Third Receiving Module:** used to receive the measurement results of the first measurement reported by the UE and/or request for reconfiguration of the second measurement, wherein the first measurement is the measurement with higher priority between the inter-frequency/inter-system measurements and the GNSS measurements, and the second measurement is the measurement with lower priority between the inter-frequency/inter-system measurements and the GNSS measurements; the priorities of the inter-frequency/inter-system measurements and the GNSS measurements are predefined or configured by the network device; or the first measurement and second measurement are measurements determined by the UE on its own;
**First Processing Module:** used to send inter-frequency/inter-system measurement configuration to the UE, when the inter-frequency/inter-system measurement gap overlaps with the GNSS measurement gap. Specifically, the first processing module is configured to:
   send to the UE a priority between the inter-frequency/inter-system measurement and the GNSS measurement;
   receive measurement result(s) of the inter-frequency/inter-system measurement or measurement result(s) of the GNSS measurement reported by the UE;
   re-configure configuration information of not-yet-executed measurement(s) and send the re-configured configuration information to the UE.

It should be noted that the devices in these embodiments correspond to the methods applied on the network side. The implementation approaches in the above embodiments are also applicable to these device embodiments and can achieve the same technical effect. The devices provided in the disclosed embodiments can implement all method steps achieved by the method embodiments and achieve the same technical effect, and there is no need to specifically elaborate on the same parts and beneficial effects as in these embodiments.

Referring to **FIG. 13****,** the disclosed embodiment also provides a network device 1300, including: a transceiver 1301 and a processor 1302;
the transceiver 1301 is used for receiving a first message sent by the UE, where the first message includes at least one of the following pieces of information:
no GNSS measurement execution by the UE;
skipping next GNSS measurement by the UE;
cause(s) for no GNSS measurement execution or skipping next GNSS measurement;
preference regarding GNSS measurement gap configuration for the UE;
mobility information;
requesting a network for GNSS measurement gap configuration;
GNSS position validity duration;
GNSS measurement successful completion;
new GNSS position validity duration or updated GNSS position validity duration;
GNSS measurement time duration;
identity(es) or index(es) of GNSS measurement execution gap configuration information for GNSS measurement execution;
autonomous GNSS measurement execution.

Optionally, the transceiver is also used to:
send at least a set of GNSS measurement gap configuration to the UE, where the GNSS measurement gap configuration includes at least one of the following:
identity(es) or index(es) of GNSS measurement gap configuration;
GNSS measurement gap length(s);
periodicity(s) of GNSS measurement gap;
triggering condition(s)/triggering event(s) for GNSS measurement;
start time and/or complete time of GNSS measurement gap;
offset value(s) of start time and/or complete time of GNSS measurement gap relative to start time and/or complete time of GNSS position validity;
protection time of GNSS measurement gap.

Optionally, the transceiver is also used to execute at least one of the following:
sending to the UE GNSS measurement triggering information;
sending to the UE periodic GNSS measurement information.

Optionally, the GNSS measurement triggering information includes at least one of the following:
indicator for triggering the UE to execute GNSS measurement;
GNSS measurement gap configuration;
identity(es) or index(es) of GNSS measurement gap configuration.

Optionally, the UE's preference regarding GNSS measurement gap configuration for the UE includes at least one of:
desirable GNSS measurement gap mode;
periodic or aperiodic GNSS measurement;
power consumption needs.

Optionally, if the first message does not include the new or updated GNSS position validity duration, the processor is used to:
when the first message includes information regarding no GNSS measurement execution or skipping next GNSS measurement but does not include the new GNSS position validity duration or the updated GNSS position validity duration, determine that the new GNSS position validity duration or the updated GNSS position validity duration of the UE is the same as current GNSS position validity duration or twice as current GNSS position validity duration; or, when the first message includes information regarding the GNSS measurement successful completion but does not include the new GNSS position validity duration or the updated GNSS position validity duration, determine that the new GNSS position validity duration or the updated GNSS position validity duration of the UE is the same as current GNSS position validity duration or twice as current GNSS position validity duration.

Optionally, the transceiver is also used to:
send to the UE an indicator used to indicate permission for autonomous GNSS measurement entered by the UE.

Optionally, the GNSS measurement gap mode includes at least one of the following:
start time of GNSS measurement gap being within the GNSS position validity duration or at complete time of the GNSS position validity duration of the UE;
start time of GNSS measurement gap being after complete time of the GNSS position validity duration of the UE;
complete time of GNSS measurement gap being within the GNSS position validity duration or at complete time of the GNSS position validity duration of the UE;
no overlapping between the GNSS measurement gap and the GNSS position validity duration of the UE;
partially overlapping between the GNSS measurement gap and the GNSS position validity duration of the UE;
the GNSS measurement gap being entirely within the GNSS position validity duration of the UE.

Optionally, the transceiver is also used to:
send inter-frequency/inter-system measurement configuration information, such that there is no overlap between inter-frequency/inter-system measurement gap and the GNSS measurement gap or the UE is able to complete the inter-frequency/inter-system measurement and the GNSS measurement;
receive results reported by the UE for inter-frequency/inter-system measurements and GNSS measurements.

Optionally, the transceiver is also used to:
send inter-frequency/inter-system measurement configuration to the UE, when there is overlap between the inter-frequency/inter-system measurement gap and the GNSS measurement gap, such that there would no overlap between the inter-frequency/inter-system measurement gap and the GNSS measurement gap or it is ensured that both the inter-frequency/inter-system measurement and the GNSS measurement can be completed;
receive measurement result(s) of the inter-frequency/inter-system measurement or measurement result(s) of the GNSS measurement reported by the UE;
re-configure configuration information of not-yet-executed measurement(s) and send the re-configured configuration information to the UE.

It should be noted that the devices in these embodiments correspond to the methods applied on the network side, and the implementation approaches in the above embodiments are also applicable to these device embodiments, achieving the same technical effects. The devices provided in the disclosed embodiments can implement all method steps achieved by the method embodiments and reach the same technical effects, so there is no need to elaborate on parts identical to the ones in the method embodiments and their beneficial effects.

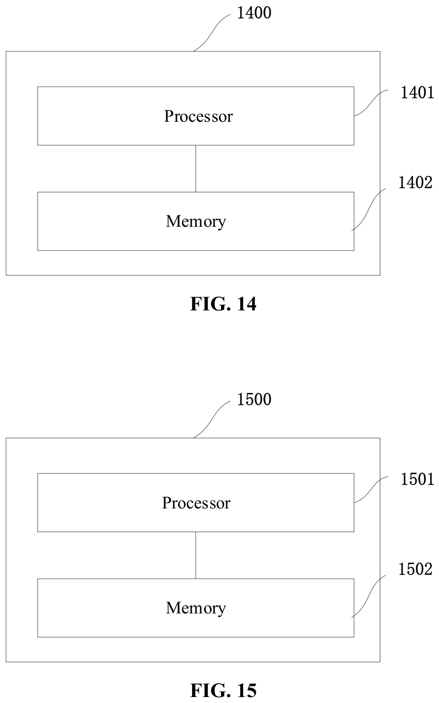

Referring to **FIG. 14****,** the disclosed embodiment also provides a UE 1400, including a processor 1401, a memory 1402, and a computer program stored in the memory 1402 and executable on the processor 1401. When the computer program is executed by the processor 1401, it implements various processes of the information transmission methods described in the UE execution of the above-mentioned embodiments, achieving the same technical effects, and to avoid repetition, this will not be reiterated.

Referring to **FIG. 15****,** the disclosed embodiment also provides a network device 1500, including a processor 1501, a memory 1502, and a computer program stored in the memory 1502 and executable on the processor 1501. When the computer program is executed by the processor 1501, it implements various processes of the information transmission methods described in the network device execution of the above-mentioned embodiments, achieving the same technical effects, and to avoid repetition, this will not be reiterated.

The disclosed embodiment also provides a computer-readable storage medium, on which a computer program is stored. When the computer program is executed by a processor, it implements various processes of the information transmission methods described in the above embodiments, achieving the same technical effects, and to avoid repetition, this will not be reiterated. The computer-readable storage medium may include Read-Only Memory (ROM), Random-Access Memory (RAM), magnetic disks, or optical disks, etc.

It should be noted that the terms "include," "comprise," or any variations thereof used herein are intended to cover non-exclusive inclusion, allowing a process, method, article, or apparatus that includes a series of elements to not only include those elements but also other elements that are not expressly listed or inherent to the processes, methods, articles, or apparatuses. Under the absence of any further limitations, elements described by the phrase "including one..." do not exclude the presence of additional identical elements in the processes, methods, articles, or apparatuses that include that element.

Through the description of the above embodiments, those skilled in the art can clearly understand that the methods of the aforementioned embodiments can be realized by software combined with the necessary general hardware platforms, although they can also be implemented through hardware. However, in many cases, the former is a better implementation method. Based on this understanding, the technical solutions disclosed herein, in essence, contribute to the existing technology and can be achieved in the form of a software product, where the software product is stored in a storage medium (such as ROM/RAM, magnetic disks, optical disks), including several instructions for causing a UE (which may be a mobile phone, computer, server, air conditioner, or network device, etc.) to execute the methods described in various embodiments of this disclosure.

The above has described the disclosed embodiments in conjunction with the accompanying drawings, but the disclosure is not limited to the specific embodiments outlined above. These specific embodiments are merely illustrative and not restrictive. Those skilled in the art may make various forms in light of the teachings of this disclosure without departing from the spirit and scope of the claims protected herein, and all such forms fall within the scope of this disclosure.

## Claims

1. An information transmission method, comprising:
sending, by a User Equipment (UE), a first message to a network, wherein the first message comprises at least one of the following pieces of information:
no Global Navigation Satellite System (GNSS) measurement execution by the UE;
skipping next GNSS measurement by the UE;
cause(s) for no GNSS measurement execution or skipping next GNSS measurement;
preference regarding GNSS measurement gap configuration for the UE;
mobility information;
requesting the network for GNSS measurement gap configuration;
GNSS position validity duration;
GNSS measurement successful completion;
new GNSS position validity duration or updated GNSS position validity duration;
GNSS measurement time duration;
identity(es) or index(es) of GNSS measurement execution gap configuration information for GNSS measurement execution;
autonomous GNSS measurement execution.

2. The information transmission method according to claim 1, further comprising:
determining, by the UE, whether to execute GNSS measurement or determining whether to skip next GNSS measurement, in accordance with one or more of the GNSS position validity duration, the mobility information, uplink synchronization state, or other assistant information.

3. The information transmission method according to claim 1, further comprising:
receiving at least one set of GNSS measurement gap configuration, wherein the GNSS measurement gap configuration comprises at least one of:
identity(es) or index(es) of GNSS measurement gap configuration;
GNSS measurement gap length(s);
periodicity(s) of GNSS measurement gap;
triggering condition(s)/triggering event(s) for GNSS measurement;
start time and/or complete time of GNSS measurement gap;
offset value(s) of start time and/or complete time of GNSS measurement gap relative to start time and/or complete time of GNSS position validity;
protection time of GNSS measurement gap.

4. The information transmission method according to claim 1, wherein the sending the first message comprises at least one of the following:
determining, by the UE, whether to execute GNSS position measurement or skip next GNSS measurement upon receipt of GNSS measurement triggering information sent by the network, and sending the first message to the network;
determining, by the UE, whether to execute GNSS position measurement or skip next GNSS measurement prior to execution of periodic GNSS measurement, and sending the first message to the network.

5. The information transmission method according to claim 4, wherein the GNSS measurement triggering information comprises at least one of:
indicator for triggering the UE to execute GNSS measurement;
GNSS measurement gap configuration;
identity(es) or index(es) of GNSS measurement gap configuration.

6. The information transmission method according to claim 1, wherein the preference regarding GNSS measurement gap configuration for the UE comprises at least one of:
desirable GNSS measurement gap mode;
periodic or aperiodic GNSS measurement;
power consumption needs.

7. The information transmission method according to claim 1, wherein
when the first message comprises information regarding no GNSS measurement execution or skipping next GNSS measurement but does not comprise the new GNSS position validity duration or the updated GNSS position validity duration, the first message is used to implicitly indicate that the new GNSS position validity duration or the updated GNSS position validity duration is the same as current GNSS position validity duration or twice as current GNSS position validity duration; or
when the first message comprises information regarding the GNSS measurement successful completion but does not comprise the new GNSS position validity duration or the updated GNSS position validity duration, the first message is used to implicitly indicate that the new GNSS position validity duration or the updated GNSS position validity duration is the same as current GNSS position validity duration or twice as current GNSS position validity duration.

8. The information transmission method according to claim 1 or 3, wherein in an event that the UE fails to receive the at least one set of GNSS measurement gap configuration sent by the network, the information transmission method further comprises:
executing, by the UE, autonomous GNSS measurement, when the GNSS position validity duration expires or completes, wherein measurement time is the same as the time for GNSS measurement reported within the first message by the UE.

9. The information transmission method according to claim 1, further comprising:
receiving, by the UE, an indicator used to indicate autonomous GNSS measurement is enabled by the network.

10. The information transmission method according to claim 6, wherein the desirable GNSS measurement gap mode comprises at least one of:
start time of GNSS measurement gap being within the GNSS position validity duration or at complete time of the GNSS position validity duration of the UE;
start time of GNSS measurement gap being after complete time of the GNSS position validity duration of the UE;
complete time of GNSS measurement gap being within the GNSS position validity duration or at complete time of the GNSS position validity duration of the UE;
no overlapping between the GNSS measurement gap and the GNSS position validity duration of the UE;
partially overlapping between the GNSS measurement gap and the GNSS position validity duration of the UE;
the GNSS measurement gap being entirely within the GNSS position validity duration of the UE.

11. The information transmission method according to claim 3, wherein the UE does not execute data transmission or only execute data re-transmission within the protection time,
wherein configuration information for the protection time is either pre-determined or configured by the network for the UE.

12. The information transmission method according to claim 3, wherein when the UE is configured with inter-frequency/inter-system measurement by the network, and there is overlap between inter-frequency/inter-system measurement gap and the GNSS measurement gap, the information transmission method further comprises at least one of:
executing, by the UE, the higher-priority measurement between the inter-frequency/inter-system measurement and the GNSS measurement, and reporting measurement result(s) to the network and/or requesting the network for re-configuration of the lower-priority measurement after completion of the higher-priority measurement, wherein the priority between the inter-frequency/inter-system measurement and the GNSS measurement is either pre-determined or configured by the network;
determining, by the UE, on its own execution of the inter-frequency/inter-system measurement or the GNSS measurement, and reporting measurement result(s) to the network and/or requesting the network for re-configuration of not-yet-executed measurement(s) after completion of the inter-frequency/inter-system measurement or the GNSS measurement.

13. The information transmission method according to claim 3, further comprising:
determining, by the UE, whether ephemeris information turns invalid within the GNSS measurement gap duration, in accordance with the GNSS position validity duration, the GNSS measurement gap validity duration and ephemeris information validity duration;
obtaining, by the UE, new ephemeris information prior to the GNSS measurement gap, in an event that the ephemeris information turns invalid within the GNSS measurement gap duration.

14. An information transmission method, comprising:
receiving, by a network device, a first message from a User Equipment (UE), wherein the first message comprises at least one of the following pieces of information:
no Global Navigation Satellite System (GNSS) measurement execution by the UE;
skipping next GNSS measurement by the UE;
cause(s) for no GNSS measurement execution or skipping next GNSS measurement;
preference regarding GNSS measurement gap configuration for the UE;
mobility information;
requesting a network for GNSS measurement gap configuration;
GNSS position validity duration;
GNSS measurement successful completion;
new GNSS position validity duration or updated GNSS position validity duration;
GNSS measurement time duration;
identity(es) or index(es) of GNSS measurement execution gap configuration information for GNSS measurement execution;
autonomous GNSS measurement execution.

15. The information transmission method according to claim 14, further comprising:
sending to the UE at least one set of GNSS measurement gap configuration, wherein the GNSS measurement gap configuration comprises at least one of:
identity(es) or index(es) of GNSS measurement gap configuration;
GNSS measurement gap length(s);
periodicity(s) of GNSS measurement gap;
triggering condition(s)/triggering event(s) for GNSS measurement;
start time and/or complete time of GNSS measurement gap;
offset value(s) of start time and/or complete time of GNSS measurement gap relative to start time and/or complete time of GNSS position validity;
protection time of GNSS measurement gap.

16. The information transmission method according to claim 14, wherein the information transmission method further comprises at least one of the following:
sending to the UE GNSS measurement triggering information;
sending to the UE periodic GNSS measurement information.

17. The information transmission method according to claim 16, wherein the GNSS measurement triggering information comprises at least one of:
indicator for triggering the UE to execute GNSS measurement;
GNSS measurement gap configuration;
identity(es) or index(es) of GNSS measurement gap configuration.

18. The information transmission method according to claim 14, wherein the preference regarding GNSS measurement gap configuration for the UE comprises at least one of:
desirable GNSS measurement gap mode;
periodic or aperiodic GNSS measurement;
power consumption needs.

19. The information transmission method according to claim 14, further comprising:
when the first message comprises information regarding no GNSS measurement execution or skipping next GNSS measurement but does not comprise the new GNSS position validity duration or the updated GNSS position validity duration, determining that the new GNSS position validity duration or the updated GNSS position validity duration of the UE is the same as current GNSS position validity duration or twice as current GNSS position validity duration; or
when the first message comprises information regarding the GNSS measurement successful completion but does not comprise the new GNSS position validity duration or the updated GNSS position validity duration, determining that the new GNSS position validity duration or the updated GNSS position validity duration of the UE is the same as current GNSS position validity duration or twice as current GNSS position validity duration.

20. The information transmission method according to claim 14, further comprising:
sending, by the network device, to the UE an indicator used to indicate permission for autonomous GNSS measurement entered by the UE.

21. The information transmission method according to claim 18, wherein the desirable GNSS measurement gap mode comprises at least one of:
start time of GNSS measurement gap being within the GNSS position validity duration or at complete time of the GNSS position validity duration of the UE;
start time of GNSS measurement gap being after complete time of the GNSS position validity duration of the UE;
complete time of GNSS measurement gap being within the GNSS position validity duration or at complete time of the GNSS position validity duration of the UE;
no overlapping between the GNSS measurement gap and the GNSS position validity duration of the UE;
partially overlapping between the GNSS measurement gap and the GNSS position validity duration of the UE;
the GNSS measurement gap being entirely within the GNSS position validity duration of the UE.

22. The information transmission method according to claim 15, further comprising:
sending, by the network device, inter-frequency/inter-system measurement configuration information, such that there is no overlap between inter-frequency/intersystem measurement gap and the GNSS measurement gap or the UE is able to complete the inter-frequency/inter-system measurement and the GNSS measurement.

23. The information transmission method according to claim 15, further comprising:
sending, by the network device, inter-frequency/inter-system measurement configuration information;
when there is overlap between inter-frequency/inter-system measurement gap and the GNSS measurement gap:
sending to the UE a priority between the inter-frequency/inter-system measurement and the GNSS measurement;
receiving measurement result(s) of the inter-frequency/inter-system measurement or measurement result(s) of the GNSS measurement reported by the UE;
reconfiguring configuration information of not-yet-executed measurement(s) and sending the re-configured configuration information to the UE.

24. A User Equipment (UE), comprising a transceiver and a processor, wherein the transceiver is configured to send a first message to a network, wherein the first message comprises at least one of the following pieces of information:
no Global Navigation Satellite System (GNSS) measurement execution by the UE;
skipping next GNSS measurement by the UE;
cause(s) for no GNSS measurement execution or skipping next GNSS measurement;
preference regarding GNSS measurement gap configuration for the UE;
mobility information;
requesting the network for GNSS measurement gap configuration;
GNSS position validity duration;
GNSS measurement successful completion;
new GNSS position validity duration or updated GNSS position validity duration;
GNSS measurement time duration;
identity(es) or index(es) of GNSS measurement execution gap configuration information for GNSS measurement execution;
autonomous GNSS measurement execution.

25. A UE comprising a memory, a processor, and a computer program stored in the memory and executed by the processor, wherein the computer program is executed by the processor so as to implement the steps in the information transmission method according to any one of claims 1 to 13.

26. A network device, comprising a transceiver and a processor, wherein the transceiver is configured to receive a first message from a User Equipment (UE), wherein the first message comprises at least one of the following pieces of information:
no Global Navigation Satellite System (GNSS) measurement execution by the UE;
skipping next GNSS measurement by the UE;
cause(s) for no GNSS measurement execution or skipping next GNSS measurement;
preference regarding GNSS measurement gap configuration for the UE;
mobility information;
requesting a network for GNSS measurement gap configuration;
GNSS position validity duration;
GNSS measurement successful completion;
new GNSS position validity duration or updated GNSS position validity duration;
GNSS measurement time duration;
identity(es) or index(es) of GNSS measurement execution gap configuration information for GNSS measurement execution;
autonomous GNSS measurement execution.

27. A network device comprising a memory, a processor, and a computer program stored in the memory and executed by the processor, wherein the computer program is executed by the processor so as to implement the steps in the information transmission method according to any one of claims 14 to 23.

28. A computer-readable storage medium storing therein a computer program, wherein the computer program is executed by a processor so as to implement the steps in the information transmission method according to any one of claims 1 to 23.
